# EUROPÄISCHE PATENTSCHRIFT

(11) **EP 1 053 132 B1**
(45) Veröffentlichungstag und Bekanntmachung des Hinweises auf die Patenterteilung: **16.04.2003**
(21) Anmeldenummer: 99908878.4
(22) Anmeldetag: 11.02.1999
(51) Int. Cl.: B60R 21/16

(54) **RÜCKHALTEVORRICHTUNG MIT SPANNEINRICHTUNG**
RESTRAINING DEVICE WITH TENSIONING ELEMENT
INSTALLATION DE RETENUE POURVUE D'UN DISPOSITIF DE TENSION

(30) Priorität: 13.02.1998 DE 29802507 U
(43) Veröffentlichungstag der Anmeldung: 22.11.2000
(73) Patentinhaber: TRW Occupant Restraint Systems GmbH & Co. KG, 73553 Alfdorf (DE)
(72) Erfinder: TIETZE, Hans-Joachim, D-73540 Heubach (DE); SCHAUPP, Jochen, D-73431 Aalen (DE)
(74) Vertreter: Kitzhofer, Thomas, Dipl.-Ing.
(86) Internationale Anmeldenummer: EP9900899
(87) Internationale Veröffentlichungsnummer: WO99041110

(56) Entgegenhaltungen:
- DE-A- 19 639 617
- GB-A- 2 324 068
- GB-A- 2 327 066
- US-A- 5 322 322

## Beschreibung

Die vorliegende Erfindung betrifft eine Rückhaltevorrichtung für Fahrzeuginsassen, insbesondere zum seitlichen Rückhalten des Insassen, mit einem aufblasbaren Gassack und einer Spanneinrichtung, die mit dem Fahrzeug verbunden ist, am Gassack angreift, den Gassack beim Aufblasen in eine vorgesehene Lage zieht und den Gassack in dieser Lage hält.

Eine solche Rückhaltevorrichtung wird zum Beispiel in der DE-U-296 15 485 beschrieben. Bei dem bekannten Ruckhaltesystem oder Air-Bag-System wird eine Spanneinrichtung mit Zugfeder und Spannband verwendet, um den Air-Bag oder aufblasbaren Gassack beim Aufblasvorgang in eine vorgesehene Position zu ziehen. Die Spanneinrichtung dient auch dazu, den aufgeblasenen Gassack in der erreichten und vorgesehenen Position im Fahrzeug zu halten, wenn der Fahrzeuginsasse mit seinem Körper, z.B. seinem Kopf, auf den aufgeblasenen Gassack aufschlägt. Die Spanneinrichtung ist jedoch technisch aufwendig. Ohne Verwendung der Spanneinrichtung kann es dazu kommen, daß sich der Gassack nicht zwischen seinen Befestigungsstellen verspannt. Dann bietet er jedoch auch keine ausreichende Rückhaltewirkung beim Auftreffen des Insassen.

Die Erfindung schafft eine Ruckhaltevorrichtung mit einer einfachen und kostengünstigen Spanneinrichtung, welche ein Verspannen und Lagefixieren des Gassacks im aufgeblasenen Zustand ermöglicht.

Die erfindungsgemäße Ruckhaltevorrichtung oder Air-Bag-Vorrichtung für Fahrzeuginsassen, insbesondere zum seitlichen Rückhalten des Insassen, umfaßt einen aufblasbaren Gassack und eine Spanneinrichtung, die mit dem Fahrzeug verbunden ist und am Gassack angreift, die den Gassack beim Aufblasen in eine vorgesehene Lage zieht und die den Gassack in dieser Lage hält, wobei die Spanneinrichtung wenigstens eine aufblasbare Abspannung, die z.B schlauch- oder sackförmig ist, umfaßt, wobei sich die Abspannung durch das Autblasen in Zugrichtung verkurzt und dadurch eine Zugkraft auf den Gassack ausubt

Beim Aufblasen der Abspannung der erfindungsgemäßen Rückhaltevorrichtung erfolgt allgemein eine Verformung oder Wölbung der aufblasbaren Abspannung, die eine Längenkontraktion oder Verkürzung der aufblasbaren Abspannung ergibt, wodurch eine der Verkürzung entsprechende Zugkraft auf den Gassack beim Aufblasen und auch im aufgeblasenen Zustand des Gassacks ausgeübt wird, um ihn in der vorgesehenen Lage zu halten. Die aufblasbare Abspannung der Erfindung vermeidet somit die nachteiligen Dehnungs- oder Spieleffekte des im Stand der Technik verwendeten Spannbands oder Spannseils und hat somit überlegene Abspanneigenschaften.

Bevorzugt wird die aufblasbare Abspannung der Erfindung über das in den Gassack strömende Gas aufgeblasen, d.h., daß eine Fluidverbindung oder Strömungsöffnung zwischen Gassack und aufblasbarer Abspannung ausgebildet ist. Das hat den erheblichen Vorteil, daß die aufblasbare Abspannung, die schlauchförmig oder sackförmig sein kann, ein zusätzliches Volumen für die Aufnahme von Gas aus dem Gassackinnern darstellt, wodurch ein hoher Innendruck vermieden und ein Rebound-Effekt beim Auftreffen des Fahrzeuginsassen auf den schützenden Gassack zumindest reduziert wird. Da durch die Strömungsverbindung zwischen Gassack und Abspannung ein Überdruck im Gassack abgebaut wird, wird einem Reißen des Gassacks vorgebeugt.

Die aufblasbare Abspannung ist vorzugsweise derart ausgelegt, daß mit zunehmendem Innendruck des Gases oder Gasgemisches in der Abspannung oder im aufblasbaren Spannband die durch die Abspannung ausgeübte Zugkraft auch zunimmt. Trifft der Insasse im Ernstfall auf den aufgeblasenen, schützenden Gassack auf, wird das verdrängte Bagvolumen bzw. der entstehende Überdruck zumindest teilweise in die aufblasbare Abspannung abgeleitet, wodurch ein zunehmender Innendruck in der aufblasbaren Abspannung entsteht Der zusätzliche Innendruck bedeutet jedoch eine zusatzlich Verkürzung der Abspannung bzw. des aufblasbaren Spannbands und damit eine zusatzliche Zugkraft auf den Gassack, woraus eine zusätzliche Straffung des Gassacks resultiert

Die autblasbare Abspannung der Erfindung ist vorzugsweise form- und anbindungsmaßig so ausgelegt, daß sie sich beim Aufblasen in einer Richtung senkrecht zur Zugrichtung wölbt oder allgemein derart verformt, daß sie sich in Zugrichtung verkürzt

Bevorzugt wird ein schlauch- bzw. zylinderförmiger Spannsack bzw. ein aufblasbares Spannband, dessen Zugrichtung mit dessen Längsachse zusammenfällt.

Die aufblasbare Abspannung stützt den Gassack auch ab. Damit hat der Gassack auch dann sicheren Halt, wenn die Fensterscheiben zu Bruch gehen, was bei einem seitlichen Zusammenstoß häufig gegeben ist. Durch die Abstützung des Gassacks mit der aufblasbaren Abspannung wird deshalb einem Hinausschleudern des Insassen vorgebeugt.

Das schlauchförmige oder sackförmige Abspannung kann an einem Ende mit dem Gassack und am anderen Ende mit einer Karosserie des Fahrzeugs verbunden sein, also als alleiniges Spannmittel für den Gassack dienen. Das schlauchförmige Spannband kann jedoch auch z.B an einem Ende mit dem Gassack und am anderen Ende mit einer Vorspanneinrichtung, z.B. einer Zugfeder, verbunden sein.

Die aufblasbare Abspannung kann anstelle des Spannbands nach der DE-U-296 15 485 oder in Kombination mit dem Spannband des Stands der Technik verwendet werden. Die Abspannung kann zusätzlich zu dem Spannband des Stands der Technik, auch an einer anderen Stelle, z.B. an einem unterschiedlichen Anbindungspunkt wie das herkömmliche Spannband, am Gassack angebracht werden

Die aufblasbare Abspannung kann am Gassack beliebig befestigt sein, wird aber bevorzugt an diesen angenäht oder angewebt

Die erfindungsgemäße Rückhaltevorrichtung kann einen Gassack mit mehreren Kammern haben, um eine zusatzlichen Verkurzung oder Längenkontraktion des Gassacks selbst zu erhalten, die sich zur Verkürzung der aufblasbaren Abspannung hinzuaddiert und das Abspannen und Straffen des Gassacks verbessert.

Die Spanneinrichtung kann mehrere Abspannungen haben, die an unterschiedlichen Stellen am Gassack angebracht sein können, um die Lagefixierung des Gassacks zu verbessern und/oder mehrere Abstützstellen für den Gassack bereitzustellen.

Weitere vorteilhafte Weiterbildungen des Gegenstands der Erfindung sind in den Unteransprüchen 2 bis 13 angegeben.

Weitere Vorteile, Anwendungsmöglichkeiten und vorteilhafte Weiterbildungen der Erfindung sind der nachfolgenden Beschreibung von Ausführungsbeispielen in Verbindung mit den Zeichnungen zu entnehmen. Es zeigen:
Figur 1 eine herausgeloste Teilansicht einer Ausführungsform der erfindungsgemäßen Rückhaltevorrichtung mit gefaltetem Gassack und einer Spanneinrichtung mit aufblasbarer, bandförmiger Abspannung:
Figur 2 die Teilansicht der Figur 1 mit ausgelöster Rückhaltevorrichtung, wobei der Gassack und die Abspannung aufgeblasen sind;
Figur 3 eine schematische Ansicht, die ein Beispiel für die Anbringung einer aufblasbaren Abspannung an einem Gassack verdeutlicht;
Figur 4 eine Ansicht, die ein weiteres Beispiel für die Anbringung einer Abspannung an einem Gassack verdeutlicht, in Richtung des Pfeiles IV der Figur 5 gesehen;
Figur 5 die Ansicht der Figur 4 in der Richtung des Pfeiles V der Figur 4 gesehen;
Figur 6 ein Diagramm, das die durch die aufblasbare Abspannung nach den Figuren 1 und 2 erzeugte Zugkraft in Abhängigkeit vom Innendruck der Abspannung angibt, und
Figur 7 ein Diagramm, das die Langenänderung der aufblasbaren Abspannung der Figuren 1 und 2 in Abhängigkeit von der Zeitdauer des Aufblasvorgangs angibt.

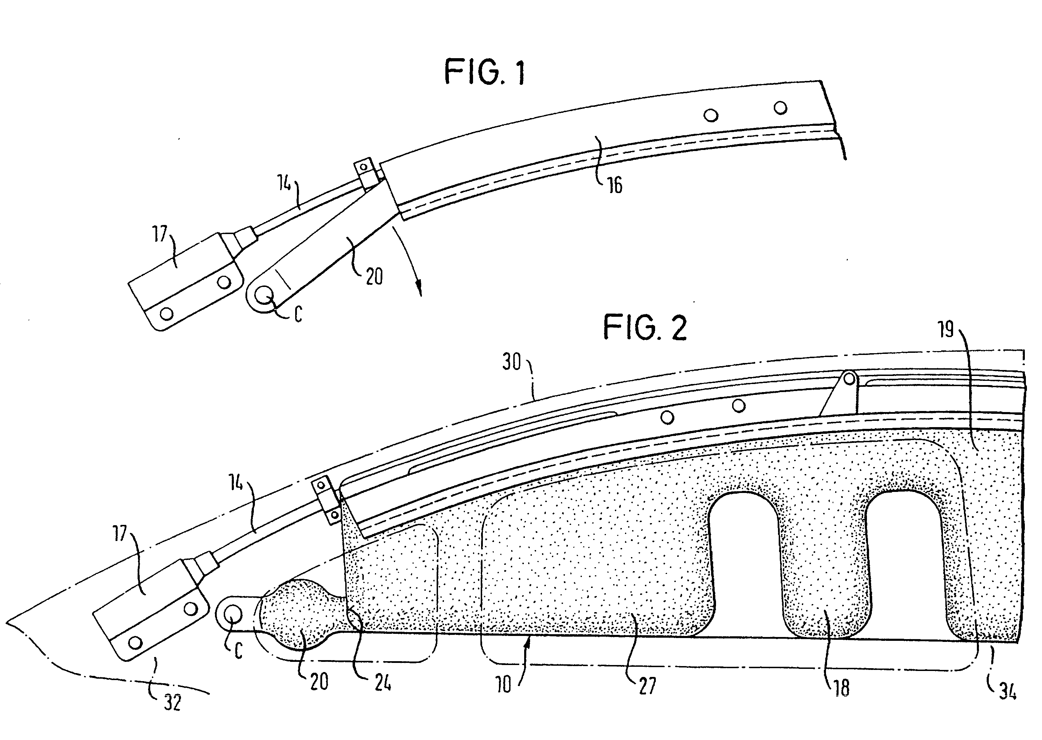

Nachfolgend wird eine Ausfuhrungsform der erfindungsgemaßen Ruckhaltevorrichtung anhand der Figuren 1 und 2 erlautert Die gezeigte Ruckhaltevorrichtung umfaßt neben einer elektronischen Steuerung (nicht gezeigt) einen Gassack 10 mit mehreren in Stromungsrichtung zueinander stehenden Kammern 18, 19, 27, ein Gasrohr 14, einen Gasgenerator 17, der nach Auslösung durch die elektronische Steuerung ein Gas oder Gasgemisch in das Gasrohr 14 abgibt, das wiederum das Gas dem Gassack 10 gleichmäßig auf seiner gesamten Länge zuführt, um ihn aufzublasen. Als aufblasbare Abspannung 20 einer Spanneinrichtung ist ein aufblasbares Spannband zwischen dem Gassack 10 und einer C-Säule 32 des Fahrzeugs angeordnet.

Der Gassack 10 ist als Seitenaufprall-Airbag in der Insassenzelle auf der Fahrerseite ausgelegt und erstreckt sich von einer A-Säule (nicht gezeigt) über eine B-Säule 34 bis zu der C-Säule 32 der in der Figur 2 strich-punktiert angedeuteten Karosserie eines Kraftfahrzeugs. Der Gassack 10 ist, wenn er nicht benötigt wird, in einer Halterung 16 z.B. hinter einer wegklappbaren Verkleidung (nicht gezeigt) zusammengefaltet. Die Halterung 16, der Gasgenerator 17 und das Gasrohr 14 sind an einem Dachholm des Dachrahmens 30 des Kraftfahrzeugs befestigt.

Die aufblasbare, schlauchartige Abspannung 20 ist mit einem Ende an der C-Säule 32 um einen Drehpunkt C herum drehbar befestigt. An diesem Ende ist die Abspannung 20 geschlossen. Das andere Ende der Abspannung 20 ist offen und am unteren Rand des entfalteten Gassacks 10 mit diesem fest verbunden, z.B. an dem Gassack 10 angewoben oder angenäht. Zwischen dem Inneren des Gassacks 10 und dem Inneren der Abspannung 20 ist eine Fluidverbindung 24 vorgesehen, z.B eine Öffnung in dem Gassack 10, über die Gas aus dem Inneren des Gassacks 10 in das Innere der Abspannung 20 und umgekehrt strömen kann. Zwischen der A-Säule und dem anderen, nicht gezeigten Ende des Gassacks 10 ist eine entsprechende Abspannung angeordnet

Die Abspannung 20 besteht aus dem gleichen Material wie der Gassack 10 oder aus einem beliebigen, anderen Luftsackmaterial Das Material der Abspannung 20 kann eine Außen- und/oder eine Innenbeschichtung haben. Das Gewebe der aufblasbaren Abspannung 20 hat eine Webrichtung von 45° zur Langserstreckung der Abspannung 20

Findet ein Seitenaufprall statt, lost die elektronische Steuerung den Gasgenerator 17 aus, der daraufhin Gas über das Gasrohr 14 dem Gassack 10 zuführt. Der Gassack 10 tritt aus der Halterung 16 hervor und nimmt sehr schnell den in der Figur 2 gezeigten aufgeblasenen Zustand an. Gleichzeitig mit dem Füllen des Gassacks 10 strömt das Gas vom Inneren des Gassacks 10 auch in das Innere der Abspannung 20. Der Innendruck der Abspannung 20 nimmt immer weiter zu. Der zunehmende Innendruck in der Abspannung 20 führt zu einer immer stärkeren Verformung oder Wölbung des Gewebematerials der Abspannung 20, wodurch sich die Abspannung 20 immer mehr verkürzt. Durch die Verkürzung übt die Abspannung 20 eine Zugkraft auf den Gassack 10 an der Befestigungsstelle der Abspannung 20 am Gassack 10 aus. Diese Zugkraft wirkt entlang einer zentralen Längsachse der schlauchartigen Abspannung 20 und zieht den Gassack 10 in eine vorgesehene Endposition und hält ihn in dieser fest. Die zahlreichen Kammern 18, 19, 27 führen zusätzlich zu Wölbungen des Gassackgewebes, was eine Längenverkürzung des Gassacks in Fahrzeuglängsrichtung zur Folge hat. Dieser Effekt erhoht die Zugkraft.

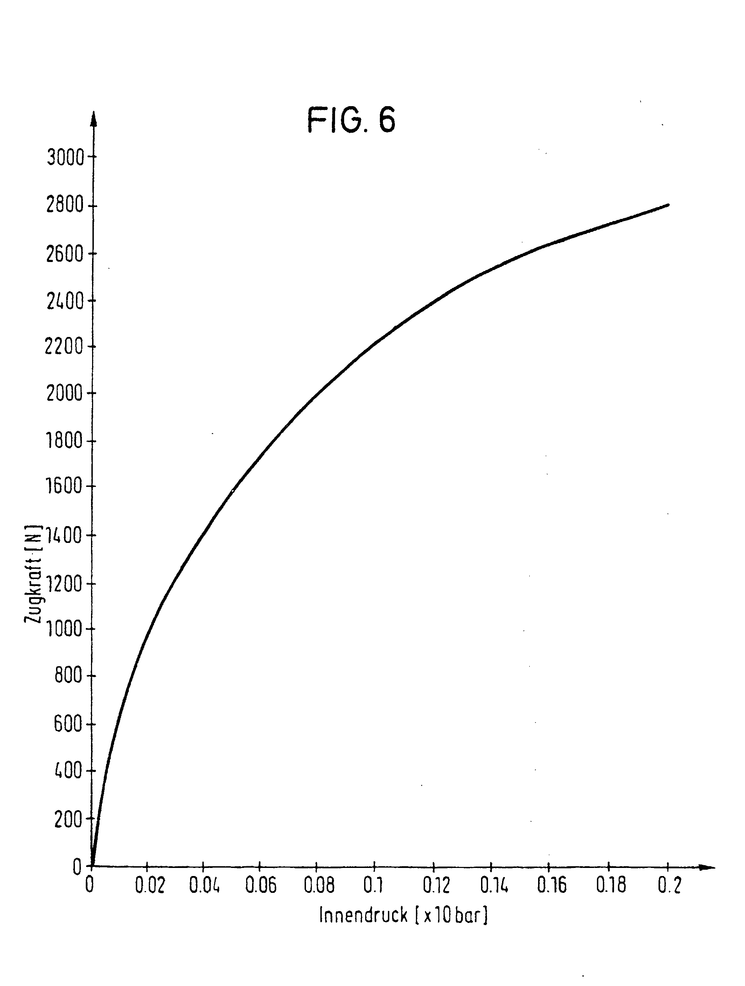

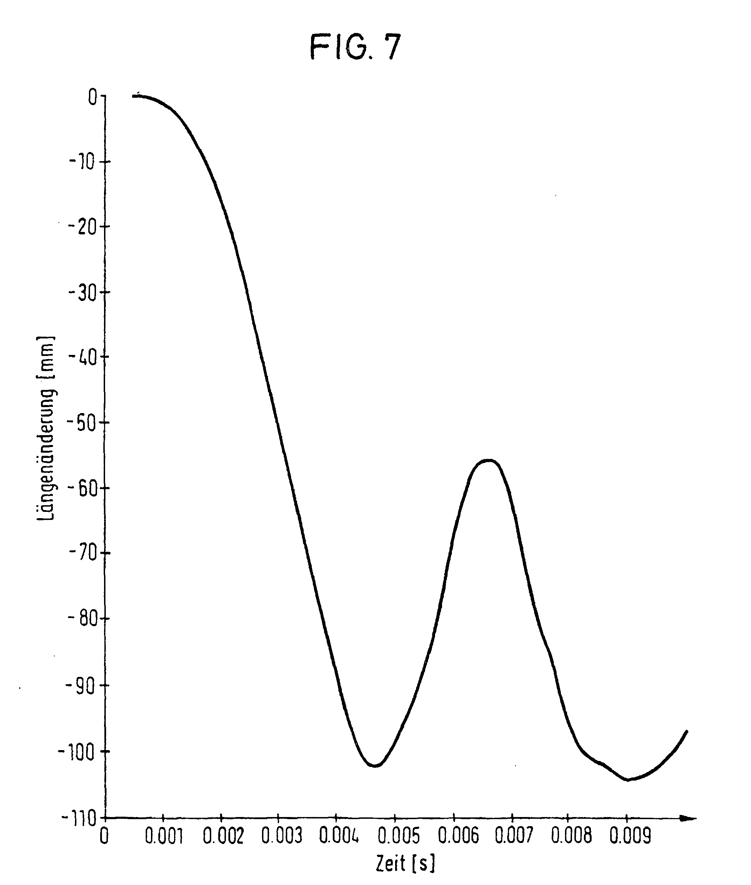

Zur Verdeutlichung der Zugkraft durch Längenkontraktion ist in der Figur 6 die beim Aufblasen der Abspannung 20 typischerweise auftretende, gemessene Zugkraft in Abhängigkeit von dem Innendruck im Inneren der Abspannung 20 und damit des Gassacks 10 dargestellt. Die Verkürzung der Abspannung 20 geschieht sehr schnell, innerhalb von typischerweise 5 bis 10 ms, wie der Figur 7 zu entnehmen ist, die die Längenanderung der Abspannung 20 in Abhängigkeit von der abgelaufenen Zeit seit Beginn des Gaseinstromens (zeitlicher Nullpunkt in der Figur 7) wiedergibt, wobei die Abspannung 20 bei einer Länge von 400 mm und einem Durchmesser von 50 mm eine Verkürzung oder Längenänderung von ca 100 mm zeigt. Die Abspannung 20 ist somit geeignet, in der fur einen Aufprallschutz erforderlichen kurzen Zeit die gewunschte Straffung und Positionshaltigkeit des Gassacks 10 mit entsprechender Zugkraft sicherzustellen.

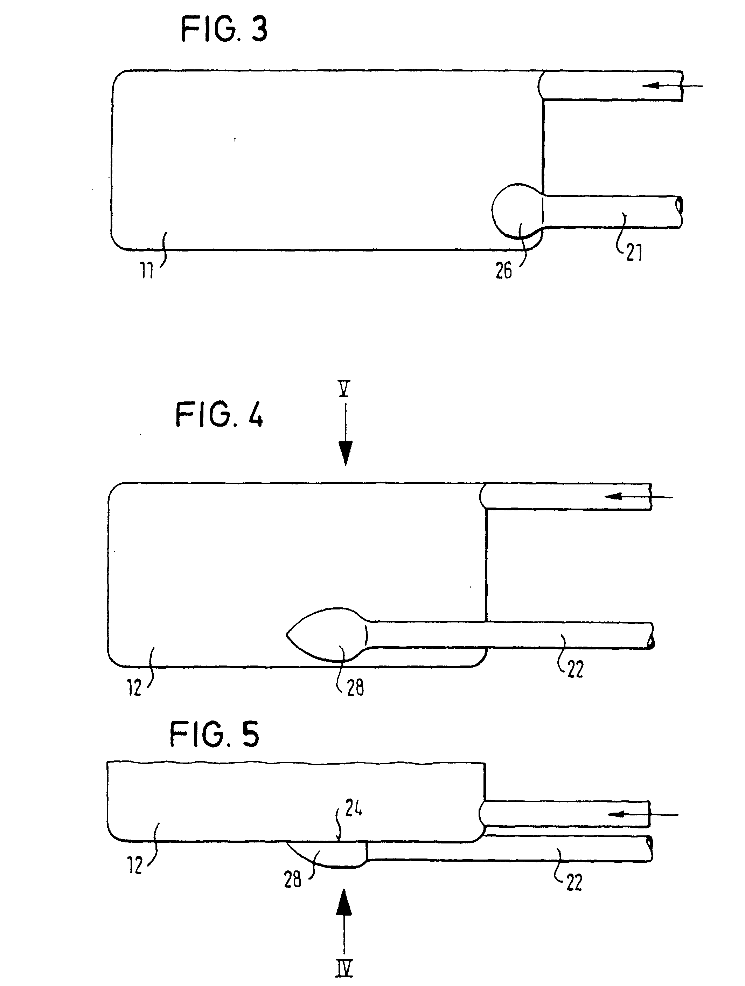

In den Figuren 3 bis 5 sind unterschiedliche Anbindungsarten von aufblasbaren Abspannungen 20 an Gassäcken schematisch dargestellt In der Figur 3 ist eine aufblasbare. schlauchartige Abspannung 21 mit einem Betestigungsansatz 26 an einem Gassack 11 in dessen Randbereich befestigt. Der Befestigungsansatz 26 ist gegenuber dem Durchmesser der Abspannung 21 aufgeweitet oder einfach breiter und hat etwa kreisformigen Umriß In den Figuren 4 und 5 ist eine weitere Ausfuhrungsform einer aufblasbaren Abspannung gezeigt Die Abspannung 22 hat wiederum einen endstandigen Befestigungsansatz 28, der gegenüber dem Durchmesser der Abspannung 22 aufgeweitet ist, um eine sichere Befestigung durch Anweben oder Annähen an dem Gassack 12 zu ermöglichen. Die Abspannung 22 liegt jedoch im Unterschied zu der Abspannung 21 der Figur 3 abschnittsweise an dem Gassack 12 an, um dem Gassack 12 eine verbesserte, zusätzliche Abstützung an der Abspannung 22 bereitzustellen.

## Patentansprüche

1. Rückhaltevorrichtung für Fahrzeuginsassen, insbesondere zum seitlichen Rückhalten des Insassen, mit einem aufblasbaren Gassack (10; 11; 12) und einer Spanneinrichtung, die mit dem Fahrzeug verbunden ist, am Gassack angreift, den Gassack beim Aulblasen in eine vorgesehene Lage zieht und den Gassack in dieser Lage hält,
**dadurch gekennzeichnet,**
**daß** die Spanneinrichtung wenigstens eine aufblasbare Abspannung (20; 21; 22) hat, die sich durch das Aufblasen in Zugrichtung verkürzt und dadurch eine Zugkraft auf den Gassack ausübt.

2. Rückhaltevorrichtung nach Anspruch 1, **dadurch gekennzeichnet, daß** die aufblasbare Abspannung über das in den Gassack (10, 11; 12) strömende Gas aufblasbar ist.

3. Rückhaltevorrichtung nach Anspruch 1 oder Anspruch 2, **dadurch gekennzeichnet, daß** sich die aufblasbare Abspannung beim Autblasen in einer Richtung senkrecht zur Zugrichtung wölbt und dadurch in Zugrichtung verkürzt.

4. Rückhaltevorrichtung nach einem der Ansprüche 1 bis 3, **dadurch gekennzeichnet, daß** die aufblasbare Abspannung sack- oder schlauchförmig ist.

5. Ruckhaltevorrichtung nach Anspruch 4, **dadurch gekennzeichnet, daß** die schlauchförmige Abspannung (20; 21; 22) an einem Ende mit dem Gassack (10; 11, 12) und am anderen Ende mit einer Karosserie des Fahrzeugs verbunden ist.

6. Rückhaltevorrichtung nach Anspruch 4, **dadurch gekennzeichnet, daß** die schlauchförmige Abspannung (20; 21, 22) an einem Ende mit dem Gassack und am anderen Ende mit einer Vorspanneinrichtung verbunden ist

7. Ruckhaltevorrichtung nach einem der Ansprüche 4 bis 6, **dadurch gekennzeichnet, daß** die schlauchförmige, aufblasbare Abspannung am Gassack angenäht oder angewoben ist.

8. Rückhaltevorrichtung nach einem der Ansprüche 1 bis 7, **dadurch gekennzeichnet, daß** die aufblasbare Abspannung an einem Ende einen aufgeweiteten Befestigungsansatz (26; 28) hat, mit dem sie am Gassack befestigt ist.

9. Rückhaltevorrichtung nach einem der Ansprüche 1 bis 8, **dadurch gekennzeichnet, daß** der Gassack (10) mehrere Kammern (18, 19, 27) hat.

10. Rückhaltevorrichtung nach Anspruch 9, **dadurch gekennzeichnet, daß** die Kammern (18, 19, 27) in Strömungsverbindung miteinander stehen.

11. Rückhaltevorrichtung nach einem der Ansprüche 1 bis 10, **dadurch gekennzeichnet, daß** mehrere aufblasbare Abspannungen vorgesehen sind, die an verschiedenen Stellen des Gassacks angreifen

12. Rückhaltevorrichtung nach Anspruch 11, **dadurch gekennzeichnet, daß** der Gassack ein Seiten-Kopf-Gassack ist, der im aufgeblasenen Zustand Bereiche der Seitenscheibe oder Seitenscheiben des Fahrzeugs abdeckt, und
daß am vorderen und hinteren Ende des Gassacks im Bereich des unteren Randes des Gassacks, bezogen auf den aufgeblasenen Zustand, jeweils eine Abspannung angreift.

13. Rückhaltevorrichtung nach Anspruch 12, **dadurch gekennzeichnet, daß** der Gassack sich von annahernd der A-Saule bis annähernd zur C-Saule des Fahrzeugs erstreckt

## Claims

1. A restraint device for vehicle occupants, in particular for the lateral restraining of the occupant, comprising an inflatable gas bag (10; 11; 12) and a tensioning device which is connected with the vehicle, engages the gas bag, pulls the gas bag into an intended position on inflation, and holds the gas bag in this position,
**characterized in that**
the tensioning device has at least one inflatable tightening means (20; 21; 22) which shortens in the pulling direction by the inflation and thereby exerts a tensile force on the gas bag.

2. The restraint device according to Claim 1, **characterized in that** the inflatable tightening means is inflatable by means of the gas flowing into the gas bag (10; 11; 12).

3. The restraint device according to Claim 1 or Claim 2, **characterized in that** the inflatable tightening means bulges in a direction perpendicular to the pulling direction on inflation and thereby shortens in the pulling direction.

4. The restraint device according to any of Claims 1 to 3, **characterized in that** the inflatable tightening means is bag-shaped or tube-shaped.

5. The restraint device according to Claim 4, **characterized in that** the tube-shaped tightening means (20; 21; 22) is connected at one end with the gas bag (10; 11; 12) and at the other end with a body of the vehicle.

6. The restraint device according to Claim 4, **characterized in that** the tube-shaped tightening means (20; 21; 22) is connected at one end with the gas bag and at the other end with a pretensioning arrangement.

7. The restraint device according to any of Claims 4 to 6, **characterized in that** the tube-shaped, inflatable tightening means is sewn to or woven on the gas bag.

8. The restraint device according to any of Claims 1 to 7, **characterized in that** the inflatable tightening means has at one end a widened fastening portion (26; 28), by which it is fastened to the gas bag.

9. The restraint device according to any of Claims 1 to 8, **characterized in that** the gas bag (10) has several chambers (18, 19, 27).

10. The restraint device according to Claim 9, **characterized in that** the chambers (18, 19, 27) are in flow connection with each other.

11. The restraint device according to any of Claims 1 to 10, **characterized in that** several inflatable tightening means are provided, which engage at different points of the gas bag.

12. The restraint device according to Claim 11, **characterized in that** the gas bag is a side and head gas bag, which in the inflated state covers regions of the side window or side windows of the vehicle, and
that the front and rear ends of the gas bag, in the region of the lower edge of the gas bag referring to the inflated state, are engaged by one tightening means each.

13. The restraint device according to Claim 12, **characterized in that** the gas bag extends from approximately the A-column to approximately the C-column of the vehicle.

## Revendications

1. Dispositif de retenue pour passagers de véhicules, en particulier pour retenir latéralement le passager, comportant un coussin à gaz (10 ; 11 ; 12) gonflable et un système de tension qui est relié au véhicule, qui s'engage sur le coussin à gaz et qui tire le coussin à gaz dans une position prévue lors du gonflage et qui maintient le coussin à gaz dans cette position,
**caractérisé en ce que**
le système de tension présente au moins un haubanage (20 ; 21 ; 22) gonflable qui se raccourcit par le gonflage en direction de traction et qui exerce donc une force de traction sur le coussin à gaz.

2. Dispositif de retenue selon la revendication 1, **caractérisé en ce que** le haubanage gonflable peut être gonflé par l'intermédiaire du gaz s'écoulant dans le coussin à gaz (10 ; 11 ; 12).

3. Dispositif de retenue selon la revendication 1 ou la revendication 2, **caractérisé en ce que** lors du gonflement dans une direction, le haubanage gonflable se bombe perpendiculairement à la direction de traction et se raccourcit par conséquent en direction de traction.

4. Dispositif de retenue selon l'une des revendications 1 à 3, **caractérisé en ce que** le haubanage gonflable est en forme de sac ou de tuyau.

5. Dispositif de retenue selon la revendication 4, **caractérisé en ce que** le haubanage en forme de tuyau (20 ; 21 ; 22) est relié à une extrémité avec le coussin à gaz (10 ; 11 ; 12) et à l'autre extrémité avec une carrosserie du véhicule.

6. Dispositif de retenue selon la revendication 4, **caractérisé en ce que** le haubanage en forme de tuyau (20 ; 21 ; 22) est relié à une extrémité avec le coussin à gaz et à l'autre extrémité avec un système de précontrainte.

7. Dispositif de retenue selon l'une des revendications 4 à 6, **caractérisé en ce que** le haubanage gonflable en forme de tuyau est cousu ou tissé sur le coussin à gaz.

8. Dispositif de retenue selon l'une des revendications 1 à 7, **caractérisé en ce que** le haubanage gonflable possède à une extrémité une saillie de fixation élargie (26 ; 28) par laquelle il est fixé sur le coussin à gaz.

9. Dispositif de retenue selon l'une des revendications 1 à 8, **caractérisé en ce que** le coussin à gaz (10) possède plusieurs chambres (18, 19, 27).

10. Dispositif de retenue selon la revendication 9, **caractérisé en ce que** les chambres (18, 19, 27) sont en communication d'écoulement les unes avec les autres.

11. Dispositif de retenue selon l'une des revendications 1 à 10, **caractérisé en ce qu'**il est prévu plusieurs haubanages gonflables qui s'engagent dans différents endroits du coussin à gaz.

12. Dispositif de retenue selon la revendication 11, **caractérisé en ce que** le coussin à gaz est un coussin à gaz de tête qui, à l'état gonflé, couvre des zones de la vitre latérale ou des vitres latérales du véhicule, et
**en ce qu'**un haubanage respectif s'engage sur l'extrémité antérieure et sur l'extrémité postérieure du coussin à gaz dans la zone du bord inférieur du coussin à gaz, par rapport à l'état gonflé.

13. Dispositif de retenue selon la revendication 12, **caractérisé en ce que** le coussin à gaz s'étend depuis approximativement la colonne A jusqu'à approximativement la colonne C du véhicule.
